# FASCICULE DE BREVET EUROPEEN

(11) **EP 3 496 998 B1**
(45) Date de publication et mention de la délivrance du brevet: **02.09.2020**
(21) Numéro de dépôt: 17746168.8
(22) Date de dépôt: 04.07.2017
(51) Int. Cl.: B62D 25/20

(54) **VEHICULE UTILITAIRE AVEC PLANCHER RENFORCÉ**
NUTZFAHRZEUG MIT VERSTÄRKTEM DECK
UTILITY VEHICLE WITH REINFORCED DECK

(30) Priorité: 12.08.2016 FR 1657747
(43) Date de publication de la demande: 19.06.2019
(73) Titulaire: PSA Automobiles S.A., 78300 Poissy (FR)
(72) Inventeur: BENANE, Said, 94550 CHEVILLY LARUE (FR)
(86) Numéro de dépôt international: PCT/FR2017/051820
(87) Numéro de publication internationale: WO 2018/029404

(56) Documents cités:
- US-A1- 2010 072 789

## Description

L'invention a trait au domaine des véhicules automobiles et plus particulièrement au domaine des véhicules utilitaires. Plus précisément, l'invention concerne un véhicule utilitaire comprenant un plancher.

Le document de brevet publié US 7 152 911 B1 divulgue un véhicule comprenant un caisson de chargement. Le caisson de chargement comprend un dispositif de renfort consistant en deux rails transversaux fixés sous le plancher du caisson de chargement, à l'avant et à l'arrière dudit plancher. Ce dispositif de renfort est spécifique à un caisson de chargement, notamment de véhicule du type pick-up ; il ne convient pas à un plancher intégré de véhicule, notamment de véhicule utilitaire. De plus, ce dispositif de renfort est essentiellement conçu pour supporter des charges importantes et non pour augmenter la rigidité du véhicule.

Le document de brevet publié FR 2 859 447 B1 divulgue un soubassement pour véhicule automobile du type cabriolet. Un renfort de longeron est utilisé pour rigidifier le plancher du véhicule par rapport à la torsion. Ce système de renfort présente une configuration complexe et ne concerne que les véhicules automobiles de type cabriolet.

Le document US2010/072789 divulgue un autre art antérieur.

Ces systèmes de renfort de plancher concerne des types précis de véhicules. De plus, ces systèmes de renfort de plancher sont complexes et/ou insuffisants pour limiter la torsion des planchers, notamment des planchers de véhicule utilitaire.

L'invention a pour objectif de résoudre au moins un des problèmes posés par l'art antérieur susmentionné. Plus particulièrement, l'invention a pour objectif de proposer un véhicule utilitaire comprenant un plancher renforcé. L'invention a également pour objectif une solution simple, économique et robuste.

L'invention a pour objet un véhicule utilitaire comprenant une partie avant avec une cabine ; et une partie arrière de chargement avec un essieu arrière, un plancher, au moins une traverse et deux longerons s'étendant, chacun, le long d'un côté latéral respectif du plancher, avec un pied arrière en vis-à-vis de l'essieu arrière et un pied milieu à la frontière entre les parties avant et arrière, chacun des pieds milieux étant en vis-à-vis d'un élément de carrosserie ; remarquable en ce que ledit véhicule comprend des moyens de renfort de rigidité en torsion du véhicule, lesdits moyens assurant une liaison entre les extrémités de la ou au moins une des traverses et les éléments de carrosserie en vis-à-vis des pieds milieux et/ou les pieds arrière, respectivement, des longerons.

Par pied milieu et pied arrière, on entend des portions des longerons qui forment des raccordements vers des montants. Ces montants peuvent cependant être absents, en fonction de la configuration du véhicule.

Selon des modes particuliers de réalisation, le véhicule utilitaire peut comprendre une ou plusieurs des caractéristiques suivantes, prises isolément ou selon toutes les combinaisons techniques possibles :
- Les moyens de renfort sont en liaison directe avec des parois des pieds arrière, lesdites parois étant situées latéralement du côté extérieur du véhicule.
- Les moyens de renfort comprennent des points de soudure par résistance électrique et, optionnellement, des pièces intermédiaires de liaison.
- La ou une des traverses liée par les moyens de renfort aux éléments de carrosserie en vis-à-vis des pieds milieu s'étend au-dessus du plancher et est fixée audit plancher.
- Les pieds arrière forment des corps creux s'étendant vers le haut au maximum jusqu'au niveau du plancher, les moyens de renfort au niveau desdits pieds comprenant, sur chaque pied, une plaque horizontale de fermeture du corps correspondant, lesdites plaques étant fixées au plancher et à la traverse correspondante, ladite traverse étant située longitudinalement au niveau desdits pieds.
- Les moyens de renfort au niveau des pieds arrière comprennent, sur chaque pied arrière, une plaque verticale à l'arrière du corps creux correspondant.
- Les plaques de renfort verticale et horizontale sur chaque pied arrière forment une seule tôle pliée.
- Chacune des plaques de renfort verticales comprend une portion horizontale en contact avec la plaque de renfort horizontale adjacente.
- La partie arrière forme au niveau du plancher une surface de réception d'un aménagement.
- Le véhicule comprend deux montants s'étendant depuis les pieds milieu et délimitant l'arrière et les côtés de la cabine.

L'invention est intéressante en ce que celle-ci propose un véhicule utilitaire comprenant des moyens de renfort configurés pour limiter la torsion du plancher, notamment à ses extrémités. En effet, la fixation de la traverse sur des éléments de carrosserie en vis-à-vis des pieds milieu permet de travailler aux extrémités latérales du véhicule et, partant, de maximiser le renforcement en vue de limiter la torsion du plancher du côté avant du véhicule. La fixation de la traverse sur les éléments de carrosserie du véhicule permet une fixation simple et robuste. La présence des moyens de renfort sur les pieds arrière permet de limiter la torsion du plancher vers l'arrière du véhicule et notamment au niveau des roues arrière du véhicule. La configuration des moyens de renfort permet leur fixation au plancher et à la traverse, assurant ainsi une fixation robuste et permettant une rigidité du plancher à l'arrière du véhicule. Leur configuration triangulaire et en deux éléments permet de transmettre les efforts de manière horizontale et verticale.

De manière générale, les modes particuliers de chaque objet de l'invention sont également applicables aux autres objets de l'invention. Dans la mesure du possible, chaque objet de l'invention est combinable aux autres objets

D'autres caractéristiques et avantages de la présente invention seront mieux compris à l'aide de la description et des dessins parmi lesquels :
- La figure 1 représente une vue de dessus du véhicule utilitaire de l'invention.
- La figure 2 représente une vue de l'arrière du véhicule utilitaire.
- La figure 3 représente une vue de dessous d'une portion arrière du véhicule utilitaire.
- La figure 4 représente une portion du véhicule comprenant les pieds arrière.
- La figure 5 représente un moyen de renfort d'un pied arrière du véhicule.

Dans la description qui va suivre les termes « avant » et « arrière » sont en relation avec le sens de marche normal d'un véhicule.

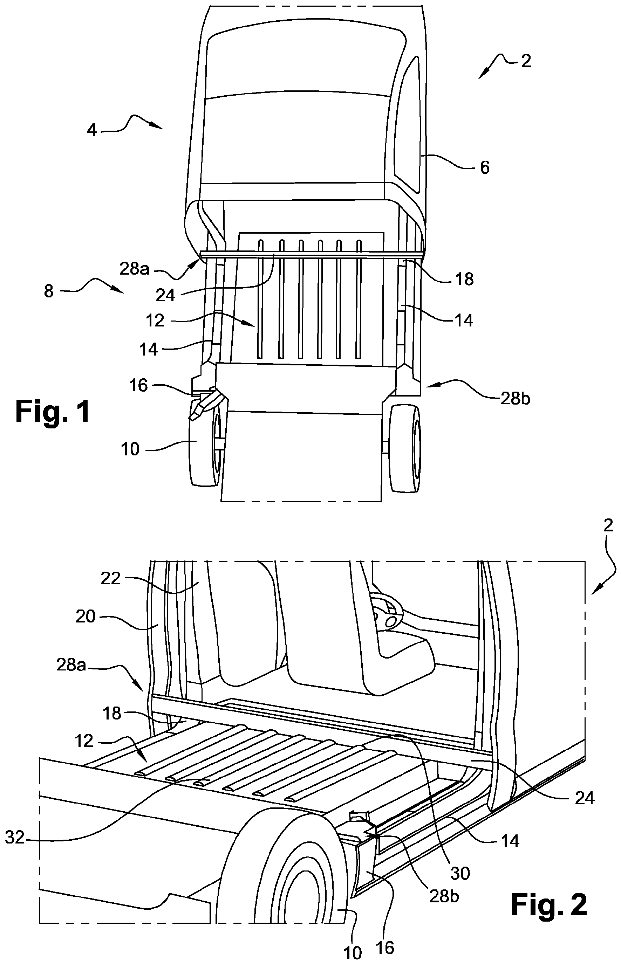

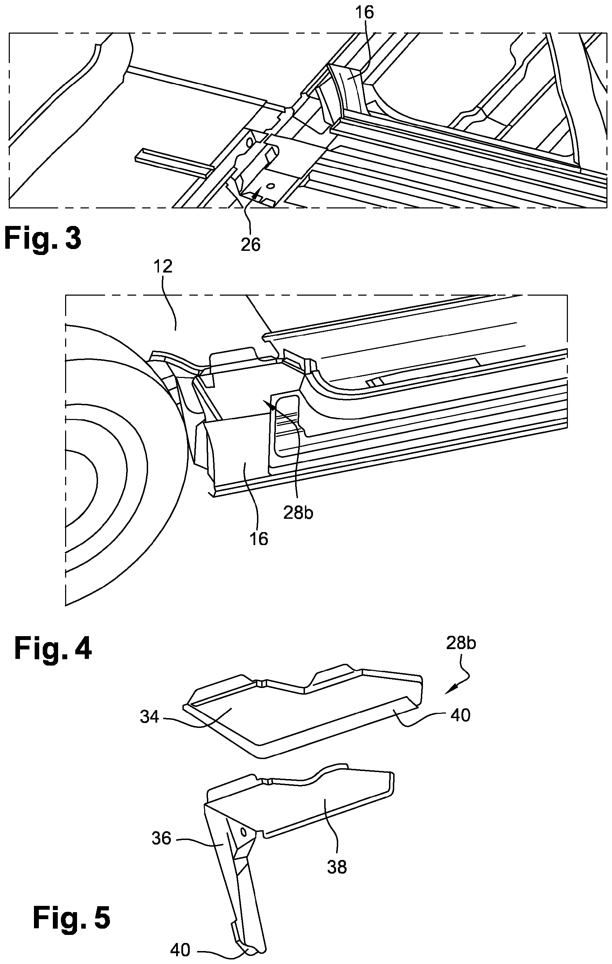

Les figures 1 et 2 représentent respectivement des vues de dessus et de l'arrière d'un véhicule utilitaire 2 et la figure 3 représente une vue de dessous d'une portion arrière du véhicule. Le véhicule utilitaire 2 comprend une partie avant 4 avec une cabine 6 et une partie arrière 8 de chargement. La cabine 6 constitue l'espace conducteur. La partie arrière 8 du véhicule comprend un essieu arrière supportant les roues arrière 10 du véhicule et un plancher 12. Le plancher 12 de la partie arrière 8 peut s'étendre de la cabine 6 jusqu'au-delà des roues arrière du véhicule. La partie arrière 8 du véhicule peut former au niveau du plancher une zone de réception d'un aménagement. La partie avant 4 comprend généralement un plancher plus haut que le plancher de la partie arrière 8 du véhicule, les deux planchers pouvant former un escalier.

La partie arrière 8 du véhicule utilitaire 2 comprend également deux longerons 14. Les longerons 14 s'étendent chacun le long d'un côté latéral respectif du plancher 12. Les longerons 14 comprennent chacun un pied arrière 16 en vis-à-vis de l'essieu arrière et un pied milieu 18 à la frontière entre les parties avant 4 et arrière 8 du véhicule. Les pieds milieu 18 sont chacun en vis-à-vis d'un élément de carrosserie 20 du véhicule. Le véhicule utilitaire 2 peut comprendre deux montants 22 s'étendant depuis les pieds milieu 18 et délimitant l'arrière et les côtés de la cabine 6. Le véhicule comprend également au moins une traverse. Une traverse 24 est présente au niveau des pieds milieu 18 et une deuxième traverse 26 (figure 3) est présente au niveau des pieds arrière 16 du véhicule. La traverse 26 est située longitudinalement au niveau des pieds arrière 16.

Le véhicule utilitaire 2 comprend des moyens de renfort 28a et 28b de rigidité en torsion du véhicule. Les moyens de renfort 28a et 28b assurent une liaison entre les extrémités de la ou au moins une des traverses 24 et 26 et les éléments de carrosserie 20 des pieds milieu 18 et/ou les pieds arrières 16, respectivement, des longerons 14. Les moyens de renfort 28a et 28b peuvent comprendre des points de soudure par résistance électrique et, optionnellement, des pièces intermédiaires de liaison.

Vers l'avant du plancher 12, les moyens de renfort 28a assurent une liaison entre les extrémités de la traverse 24 et les éléments de carrosserie 20 des pieds milieu 18. La traverse 24 s'étend sur le plancher 12 et est fixée audit plancher. La traverse 24 est préférentiellement placée contre la partie avant 4 du véhicule et contre les pieds milieu 18. La traverse 24 peut comprendre des rainures 30 destinées à coopérer avec des nervures 32 longitudinales du plancher 12.

La figure 4 représente une portion du véhicule utilitaire comprenant les pieds arrière 16, sur lesquels sont fixés des moyens de renfort 28b et la figure 5 illustre un moyen de renfort 28b des pieds arrière 16. Les pieds arrière 16 forment des corps creux s'étendant vers le haut au maximum jusqu'au niveau du plancher 12. Les moyens de renfort 28b au niveau des pieds arrière 16 comprennent, sur chaque pied, une plaque horizontale 34 de fermeture du corps correspondant. Les plaques horizontales 34 sont fixées au plancher 12 et à la traverse 26 correspondante (figure 3). Les moyens de renfort 28b comprennent également sur chaque pied arrière 16 une plaque verticale 36 à l'arrière du corps creux. Avantageusement, les plaques horizontales 34 et verticale 36 de chaque pied arrière 16 forment une seule tôle pliée. Chacune des plaques de renfort verticales 36 peut comprendre une portion horizontale 38 en contact avec la plaque de renfort horizontale 34 adjacente. Les plaques horizontales 34 et les portions horizontales 38 ont préférentiellement la même forme. Les moyens de renfort 28b sont en liaison directe avec des parois des pieds arrière 16, lesdites parois étant situées latéralement du côté extérieur du véhicule. Chacune des plaques verticales 36, horizontales 34 et les portions horizontales 38 peut comprendre des bordures 40, lesquelles vont permettre la fixation des moyens de renfort 28b. Les moyens de renfort 28b peuvent être fixés par soudure au niveau des bordures 40.

La réalisation des moyens de renfort 28b en deux éléments au niveau des pieds arrière 16 permet de transmettre les efforts de torsion de manière horizontale et verticale.

## Revendications

1. Véhicule utilitaire (2) comprenant
- une partie avant (4) avec une cabine (6) ; et
- une partie arrière (8) de chargement avec un essieu arrière, un plancher (12), au moins une traverse (24 ;26) et deux longerons (14) s'étendant, chacun, le long d'un côté latéral respectif du plancher (12), avec un pied arrière (16) en vis-à-vis de l'essieu arrière et un pied milieu (18) à la frontière entre les parties avant (4) et arrière (8), chacun des pieds milieu (18) étant en vis-à-vis d'un élément de carrosserie (20) ;
**caractérisé en ce qu'**il comprend des moyens de renfort (28a ; 28b) de rigidité en torsion du véhicule, lesdits moyens assurant une liaison entre les extrémités de la ou au moins une des traverses (24 ; 26) et les éléments de carrosserie (20) en vis-à-vis des pieds milieu (18) et/ou les pieds arrière (16), respectivement, des longerons (14).

2. Véhicule (2) selon la revendication 1, **caractérisé en ce que** les moyens de renfort (28b) sont en liaison directe avec des parois des pieds arrière (16), lesdites parois étant situées latéralement du côté extérieur du véhicule.

3. Véhicule (2) selon l'une des revendications 1 et 2, **caractérisé en ce que** les moyens de renfort (28a ; 28b) comprennent des points de soudure par résistance électrique et, optionnellement, des pièces intermédiaires de liaison.

4. Véhicule (2) selon l'une des revendications 1 à 3, **caractérisé en ce que** la ou une des traverses (24) liée par les moyens de renfort (28a) aux éléments de carrosserie (20) en vis-à-vis des pieds milieu (18) s'étend au-dessus du plancher (12) et est fixée audit plancher.

5. Véhicule (2) selon l'une des revendications 1 à 4, **caractérisé en ce que** les pieds arrière (16) forment des corps creux s'étendant vers le haut au maximum jusqu'au niveau du plancher (12), les moyens de renfort (28b) au niveau desdits pieds (16) comprenant, sur chaque pied, une plaque horizontale (34) de fermeture du corps correspondant, lesdites plaques étant fixées au plancher (12) et à la traverse (26) correspondante, ladite traverse étant située longitudinalement au niveau desdits pieds (16).

6. Véhicule (2) selon la revendication 5, **caractérisé en ce que** les moyens de renfort (24b) au niveau des pieds arrière (16) comprennent, sur chaque pied arrière, une plaque verticale (36) à l'arrière du corps creux correspondant.

7. Véhicule (2) selon la revendication 6, **caractérisé en ce que** les plaques de renfort verticale (36) et horizontale (34) sur chaque pied arrière (16) forment une seule tôle pliée.

8. Véhicule (2) selon la revendication 6, **caractérisé en ce que** chacune des plaques de renfort verticales (36) comprend une portion horizontale (38) en contact avec la plaque de renfort horizontale (34) adjacente.

9. Véhicule (2) selon l'une des revendications 1 à 8, **caractérisé en ce que** la partie arrière (8) forme au niveau du plancher (12) une surface de réception d'un aménagement.

10. Véhicule (2) selon l'une des revendications 1 à 9, **caractérisé en ce qu'**il comprend deux montants (22) s'étendant depuis les pieds milieu (18) et délimitant l'arrière et les côtés de la cabine (6).

## Patentansprüche

1. Nutzfahrzeug (2) mit einem vorderen Teil (4) mit einem Fahrerhaus (6); und einem hinteren Ladeteil (8) mit einer Hinterachse, einem Boden (12), mindestens einem Querträger (24 ; 26) und zwei Längsträgern (14), die sich jeweils entlang einer entsprechenden lateralen Seite des Bodens (12) erstrecken, mit einem hinteren Fuß (16), der der Hinterachse zugewandt ist, und einem mittleren Fuß (18) an der Grenze zwischen dem vorderen (4) und dem hinteren (8) Teil, wobei jeder der mittleren Füße (18) einem Körperteil (20) zugewandt ist; **dadurch gekennzeichnet, dass** sie Mittel (28a; 28b) zur Verstärkung der Torsionssteifigkeit des Fahrzeugs umfasst, wobei die genannten Mittel eine Verbindung zwischen den Enden des oder mindestens eines der Querträger (24; 26) und den gegenüberliegenden Karosserieelementen (20) der Mittelfüße (18) und/oder der hinteren Füße (16) der Längsträger (14) gewährleisten.

2. Fahrzeug (2) nach Anspruch 1, **dadurch gekennzeichnet, dass** die Verstärkungsmittel (28b) in direkter Verbindung mit Wänden der hinteren Beine (16) stehen, wobei diese Wände seitlich an der Außenseite des Fahrzeugs angeordnet sind.

3. Fahrzeug (2) nach einem der Ansprüche 1 und 2, **dadurch gekennzeichnet, dass** die Verstärkungsmittel (28a; 28b) elektrische Widerstandsschweißpunkte und gegebenenfalls Zwischenverbindungsteile umfassen.

4. Fahrzeug (2) nach einem der Ansprüche 1 bis 3, **dadurch gekennzeichnet, dass** der oder einer der Querträger (24), der durch die Verstärkungsmittel (28a) mit den Karosserieelementen (20) gegenüber den Mittelschenkeln (18) verbunden ist, sich über den Boden (12) erstreckt und an diesem befestigt ist.

5. Fahrzeug (2) nach einem der Ansprüche 1 bis 4, **dadurch gekennzeichnet, dass** die hinteren Schenkel (16) Hohlkörper bilden, die sich höchstens bis zum Niveau des Bodens (12) nach oben erstrecken, wobei die Verstärkungsmittel (28b) auf Höhe der genannten Schenkel (16) an jedem Schenkel eine horizontale Platte (34) zum Verschließen der entsprechenden Karosserie umfassen, wobei die genannten Platten am Boden (12) und an der entsprechenden Traverse (26) befestigt sind, wobei die genannte Traverse in Längsrichtung auf Höhe der genannten Schenkel (16) angeordnet ist.

6. Fahrzeug (2) nach Anspruch 5, **dadurch gekennzeichnet, dass** die Verstärkungsmittel (24b) an den hinteren Füßen (16) an jedem hinteren Fuß eine vertikale Platte (36) an der Rückseite des entsprechenden Hohlkörpers aufweisen.

7. Fahrzeug (2) nach Anspruch 6, **dadurch gekennzeichnet, dass** die vertikalen (36) und horizontalen (34) Verstärkungsplatten an jedem hinteren Fuß (16) ein einziges gefaltetes Blatt bilden.

8. Fahrzeug (2) nach Anspruch 6, **dadurch gekennzeichnet, dass** jede der vertikalen Verstärkungsplatten (36) einen horizontalen Abschnitt (38) in Kontakt mit der benachbarten horizontalen Verstärkungsplatte (34) aufweist.

9. Fahrzeug (2) nach einem der Ansprüche 1 bis 8, **dadurch gekennzeichnet, dass** der hintere Teil (8) in Höhe des Bodens (12) eine Fläche zur Aufnahme eines Beschlages bildet.

10. Fahrzeug (2) nach einem der Ansprüche 1 bis 9, **dadurch gekennzeichnet, dass** es zwei Stützen (22) aufweist, die sich von den Mittelfüßen (18) aus erstrecken und das Heck und die Seiten des Fahrerhauses (6) begrenzen.

## Claims

1. Utility vehicle (2) comprising
- a front part (4) with a cabin (6); and
- a rear loading part (8) with a rear axle, a floor (12), at least one cross member (24; 26) and two longitudinal members (14) each extending along a respective lateral side of the floor (12), with a rear foot (16) opposite the rear axle and a middle foot (18) at the boundary between the front (4) and the rear part (8), each of the middle feet (18) facing a body part (20), **characterised in that** the rear loading part (8) is formed as a rear part (8) with a rear axle, a floor (12), at least one cross member (24; 26) and two longitudinal members (14) each extending along a respective lateral side of the floor (12), with a rear foot (16) opposite the rear axle and a middle foot (18) at the boundary between the front (4) and the rear part (8), each of the middle feet (18) facing a body part (20);
**characterised in that** it comprises means (28a; 28b) for reinforcing the torsional rigidity of the vehicle, the said means providing a connection between the ends of the or at least one of the crossmembers (24; 26) and the facing bodywork elements (20) of the middle feet (18) and/or the rear feet (16), respectively, of the side members (14).

2. Vehicle (2) according to claim 1, **characterized in that** the reinforcement means (28b) are in direct connection with walls of the rear legs (16), said walls being located laterally on the outside of the vehicle.

3. Vehicle (2) according to one of claims 1 and 2, **characterized in that** the reinforcement means (28a; 28b) comprise electrical resistance welding points and, optionally, intermediate connecting parts.

4. Vehicle (2) according to one of claims 1 to 3, **characterized in that** the or one of the crossmembers (24) connected by the reinforcing means (28a) to the bodywork elements (20) facing the middle legs (18) extends above the floor (12) and is fixed to said floor.

5. Vehicle (2) according to one of claims 1 to 4, **characterised in that** the rear legs (16) form hollow bodies extending upwards at most to the level of the floor (12), the reinforcement means (28b) at the level of said legs (16) comprising, on each leg, a horizontal plate (34) for closing the corresponding body, said plates being fixed to the floor (12) and to the corresponding cross-member (26), said cross-member being situated longitudinally at the level of said legs (16).

6. Vehicle (2) according to claim 5, **characterised in that** the reinforcement means (24b) at the rear feet (16) comprise, on each rear foot, a vertical plate (36) at the rear of the corresponding hollow body.

7. Vehicle (2) according to claim 6, **characterized in that** the vertical (36) and horizontal (34) reinforcement plates on each rear foot (16) form a single folded sheet.

8. A vehicle (2) according to claim 6, **characterised in that** each of the vertical reinforcing plates (36) comprises a horizontal portion (38) in contact with the adjacent horizontal reinforcing plate (34).

9. Vehicle (2) according to one of claims 1 to 8, **characterized in that** the rear portion (8) forms at the level of the floor (12) a surface for receiving a fitting.

10. Vehicle (2) according to one of claims 1 to 9, **characterized in that** it comprises two uprights (22) extending from the middle feet (18) and delimiting the rear and sides of the cab (6).
